# EUROPÄISCHE PATENTSCHRIFT

(11) **EP 3 969 339 B1**
(45) Veröffentlichungstag und Bekanntmachung des Hinweises auf die Patenterteilung: **24.05.2023**
(21) Anmeldenummer: 20746877.8
(22) Anmeldetag: 09.07.2020
(51) Int. Cl.: B60T 17/20

(54) **NOTBREMSEINRICHTUNG FÜR EIN SCHIENENFAHRZEUG**
EMERGENCY BRAKE DEVICE FOR A RAIL VEHICLE
DISPOSITIF DE FREINAGE D'URGENCE POUR VÉHICULE FERROVIAIRE

(30) Priorität: 18.07.2019 AT 506482019
(43) Veröffentlichungstag der Anmeldung: 23.03.2022
(73) Patentinhaber: Siemens Mobility Austria GmbH, 1210 Wien (AT)
(72) Erfinder: MADJDI, Mehrdad, 1190 Wien (AT); HAUBENHOFER, Martin, 8045 Graz (AT); SCHMIDT, Rudolf, 1130 Wien (AT)
(74) Vertreter: Siemens Patent Attorneys
(86) Internationale Anmeldenummer: PCT/EP2020/069367
(87) Internationale Veröffentlichungsnummer: WO 2021/008990

(56) Entgegenhaltungen:
- EP-A2- 1 743 821
- WO-A2-2008/012112
- CH-A5- 593 162
- DE-A1-102017 214 553

## Beschreibung

### Technisches Gebiet

Die Erfindung betrifft eine Notbremseinrichtung für ein mit einer Druckluftbremsanlage ausgerüstetes Schienenfahrzeug.

### Stand der Technik

Gemäß einschlägiger Zulassungsvorschriften sind Passagierschienenfahrzeuge mit durch Passagiere bedienbare Notbremsen auszustatten. Deren Funktionsweise beruht darauf, dass durch manuelle Betätigung eines Griffs der Druck in einer Druckluftleitung, der sogenannten Hauptluftleitung reduziert wird, was ein Anlegen der Bremsbeläge an die Bremsscheiben bzw. Radkränze bewirkt. Zusätzlich sind Notbremseinrichtungen mit weiteren Funktionen ausgestattet, beispielsweise eine Notbremsüberbrückung zur Verhinderung eines Fahrzeugstillstands an einem ungeeigneten Streckenabschnitt, beispielsweise in einem Tunnel oder auf einer Brücke. Die Funktion einer Notbremse bedingt es, die Hauptluftleitung oder ein zu der Hauptluftleitung und mit dieser verbundenes Rohrstück zu jeder Fahrgastnotbremse zu führen. Da Passagierschienenfahrzeuge üblicherweise mit mehreren Fahrgastnotbremsen ausgestattet sind (bei Schlafwagen auch mit je einer pro Abteil) sind eine Mehrzahl von Druckluftleitungen zu der Hauptluftleitung zu führen und mit dieser zu verbinden. Dies bedingt einen großen Aufwand an Verrohrungen und erhöht die Fehlerwahrscheinlichkeit, da jede Undichtigkeit an dieser Druckluftleitungen zu einer Fehlauslösung der Notbremse führen würde. Der ausschließlich elektrische Anschluß der Fahrgastnotbremsen kann eine wesentliche Vereinfachung darstellen, ist aber nur bei Triebzügen gebräuchlich. Bei konventionellen UIC/RIC Passagierwagen sind die Sicherheitsanforderungen derzeit ohne direkten Anschluß der Fahrgastnotbremsen an das Druckluftsystem nicht umsetzbar. Dabei sind die Forderungen nach Sicherheit gegen Ausfall der Bordspannung, ein solcher Ausfall darf zu keiner unangeforderten Auslösung einer Notbremsung führen, und nach Sicherheit der Auslöseerkennung (ein Einzelfehler darf nicht dazu führen, dass eine Auslösung einer Notbremse nicht in einem Führerstand angezeigt wird) zu erfüllen.

In der deutschen Offenlegungsschrift DE102017214553A1 ist eine Testeinrichtung für ein elektro-pneumatisches Bremssystem eines Schienenfahrzeugs offenbart, mittels welcher die Durchgängigkeit der ep-Zugsteuerleitung ep-Bremsen und die Bremsfunktion kontrolliert werden kann. Dazu sind wagenseitig eine elektrische Steckverbindung und Magnetventile in den Druckluftleitungen vorgesehen. Die Bedienung selbst erfolgt mittels tragbarer Testgeräte.

Die Anmeldeschrift EP1743821A2 zeigt eine Vorrichtung und ein Verfahren zur Steuerung einer elektropneumatischen Bremse sowie eine Notbremsüberbrückung mit besonderen Funktionen betreffend einer Fehlerbehandlung.

Aus der internationalen Patenanmeldung WO 2008/012112 A2 ist eine Schnellbremssteuerung bekannt, bei welcher elektromagnetische Entlüftungsventile vorgesehen sind, welche nach dem Ruhestromprinzip arbeiten.

Eine Notbremseinrichtung für indirekt wirkende Druckluftbremsen ist in der Patentschrift CH593162A5 offenbart, bei welche unmittelbar auf pneumatische Leitungen wirkende Notbremseinrichtungen mit elektrischen Kontakten gekoppelt sind.

### Darstellung der Erfindung

Der Erfindung liegt daher die Aufgabe zugrunde, eine Notbremseinrichtung für ein Schienenfahrzeug anzugeben, welche in UIC/RIC Passagierwagen einsetzbar ist, und welche ausschließlich elektrischer Verbindungen zu den Fahrgastnotbremsen bedarf.

Die Aufgabe wird durch eine Notbremseinrichtung für ein Schienenfahrzeug mit den Merkmalen des Anspruchs 1 gelöst. Vorteilhafte Ausgestaltungen sind Gegenstand untergeordneter Ansprüche.

Dem Grundgedanken der Erfindung nach wird eine Notbremseinrichtung für ein Schienenfahrzeug mit einer Druckluftbremsanlage beschrieben, bei welcher eine Bremsung durch Absenken des Luftdrucks in einer Hauptluftleitung bewirkbar ist, wobei mindestens eine Fahrgastnotbremse vorgesehen ist, welche einen manuell betätigbaren Fahrgastnotbremsgriff umfasst, welcher auf je einen elektrischen Öffnungskontakt und einen Schließkontakt wirkt, und wobei ein bistabiles, elektromagnetisch betätigbares Druckluftventil vorgesehen ist, welches zur Entlüftung einer Hauptluftleitung ins Freie eingerichtet ist und welches je einen Öffnungsmagnetantrieb und einen Schließmagnetantrieb umfasst, und wobei ein Öffnungsrelais vorgesehen ist, welches je einen elektrischen Öffnungskontakt und einen Schließkontakt umfasst, und wobei ein Schließrelais vorgesehen ist, welches je einen elektrischen Öffnungskontakt und einen Schließkontakt umfasst, wobei die Eingänge des elektrischen Öffnungskontakts und des Schließkontakts der Fahrgasnotbremse mit einer Versorgungsspannung verbunden sind und der Ausgang des Öffnungskontakts der Fahrgastnotbremse an den elektrischen Antrieb des Öffnungsrelais geführt ist und der Ausgang des Schließkontakts der Fahrgastnotbremse an den elektrischen Antrieb des Schließrelais geführt ist, wobei die Eingänge des Öffnungskontakts und des Schließkontakts des Öffnungsrelais mit einer Versorgungsspannung verbunden sind, wobei der Ausgang des Schließkontakts des Öffnungsrelais an den Eingang des Öffnungskontakts des Schließrelais geführt ist, wobei der Eingang des Schließkontakts des Schließrelais mit einer Versorgungsspannung verbunden ist, wobei der Ausgang des Öffnungskontakts des Schließrelais an den Schließmagnetantrieb des Druckluftventils geführt ist, und wobei sowohl der Ausgang des Öffnungskontakts des Öffnungsrelais als auch der Ausgang des Schließkontakts des Schließrelais an den Öffnungsmagnetantrieb des Druckluftventils geführt sind.

Dadurch ist der Vorteil erzielbar, die bei Lösungen aus dem Stand der Technik bekannten Druckluftleitungen zu den Fahrgastnotbremsen entfallen lassen zu können und eine ausschließlich elektrische Übertragung der Notbremsauslösung an ein Druckluftventil vorzusehen.

Dabei werden wesentliche Forderungen an eine Notbremseinrichtung erfüllt, wie sie bei herkömmlichen (UIC/RIC) Passagierwagen noch nicht realisierbar waren, da diese den unmittelbaren Anschluß der Fahrgastnotbremsen an das Druckluftsystem zwingend vorsehen.

Insbesondere ist es ein Vorteil, dass ein Ausfall der Betriebsspannung nicht zu einem ungewollten Auslösen einer Notbremsung führen kann.

Erfindungsgemäß ist ein bistabiles Druckluftventil vorgesehen, welches an eine Druckluftleitung angeschlossen ist, deren Druck die Bremsaktivierung steuert, wobei bei einem Absenken des Drucks in dieser Leitung eine Bremsung ausgelöst wird. Dieses Druckluftventil entlüftet in Abhängigkeit von seiner Ansteuerung die Druckluftleitung in das Freie oder sperrt diese Entlüftung. Dabei weist das Druckluftventil zwei elektromagnetische Antriebe auf, mittels welcher das Druckluftventil zwischen einer offenen und einer geschlossenen Stellung umschaltbar ist. Ohne eine elektrische Ansteuerung verbleibt das Druckluftventil in seiner letzten Position.

Durch den Einsatz von zwei Kontakten (ein Öffnungs- und ein Schließkontakt) in der Fahrgastnotbremse, welche ein jeweils zueinander invertiertes Signal abgeben, können Einfachfehler keine Auswirkung haben. Insbesondere kann bei der erfindungsgemäßen Schaltung einer der beiden Kontakte in der Fahrgastnotbremse defekt sein, ohne die Funktion der Notbremse einzuschränken.

In weiterer Fortbildung der Erfindung ist es vorteilhaft, die Notbremseinrichtung mit einer Signalübertragung zu einer Fahrzeugsteuerung auszustatten. Dabei ist das den Öffnungsmagnetantrieb ansteuernde Signal, d.h. der Ausgang des Öffnungskontakts des Öffnungsrelais als auch der Ausgang des Schließkontakts des Schließrelais an eine Wagensteuerung zu führen. Solcherart können weitere Funktionen, insbesondere eine Information über eine ausgelöste Notbremsung an den Fahrzeugführer übermittelt werden.

Eine bevorzugte Ausführungsform der Erfindung sieht vor, ein elektromagnetisch ansteuerbares Notbremsüberbrückungsventil zwischen der Hauptluftleitung und dem bistabilen, elektromagnetischen Druckluftventil anzuordnen. Solcherart kann eine ausgelöste Notbremsung durch einen Fahrzeugführer überbrückt, werden, sodass ein Halt an einer ungeeigneten Stelle verhinderbar ist.

Die Versorgungsspannung ist dabei einer gesicherten Quelle zu entnehmen, welche vorzugsweise redundant ausgeführt ist. Dies ist insbesondere wesentlich, da Einfachfehler, z.B. der Ausfall der Versorgungsspannung der Notbremseinrichtung nicht zu einem Auslösen der Notbremse führen dürfen, jedoch bei Ausfall auch keine Auslösung mehr möglich ist. Daher ist die Versorgungsspannung einem nur für die Notbremseinrichtung vorgesehenen, batteriegepufferten Stromkreis zu entnehmen, welcher betriebsmäßig über eine Diodenbrücke aus einem Stromrichter gespeist ist. Bei einem Ausfall der Stromversorgung eines Wagens und kann aus der restlichen Zugzusammenstellung, d.h. den benachbarten Wagen, die Versorgungsspannung für die Notbremseinrichtung bezogen werden.

### Kurzbeschreibung der Zeichnungen

Es zeigen beispielhaft:

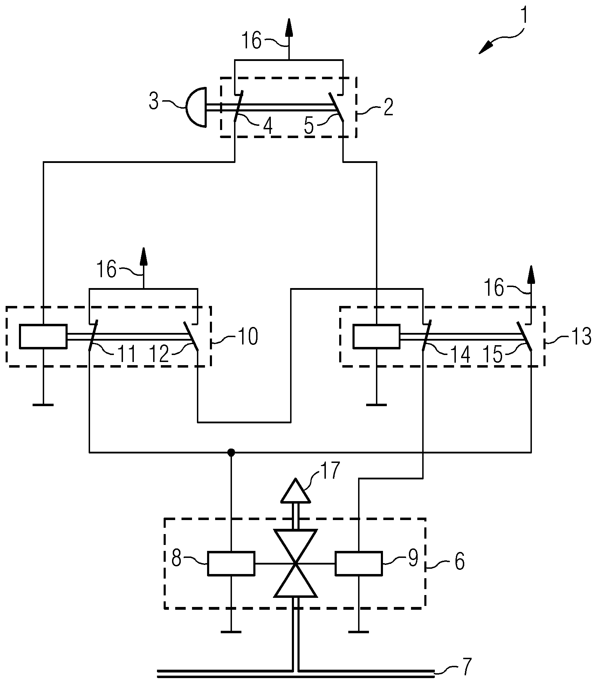

**Fig.1** Notbremseinrichtung.

### Ausführung der Erfindung

**Fig.1** zeigt beispielhaft und schematisch eine Notbremseinrichtung. Es sind das elektrische und pneumatische Schaltbild einer Notbremseinrichtung 1 dargestellt. Diese Notbremseinrichtung 1 umfasst eine Fahrgastnotbremse 2, ein bistabiles, elektromagnetisches Druckluftventil 6, ein Öffnungsrelais 10 und ein Schließrelais 13. Die Fahrgastnotbremse 2 ist mit einem manuell bedienbaren Fahrgastnotbremsgriff 3 ausgestattet, welcher mechanisch mit einem Öffnungskontakt 4 und einem Schließkontakt 5 gekoppelt ist und diese Kontakte 4, 5 zwischen einer Ruhestellung, wie in Fig. 1 dargestellt und einer Notbremsstellung bewegen kann. Druckluftventil 6 ist mit einer Hauptluftleitung 7 pneumatisch verbunden und weist eine Entlüftung 17 auf, über welche die in der Hauptluftleitung 7 geführte Druckluft in das Freie entweichen kann. Dabei ist das Druckluftventil 6 zwischen einer geschlossenen und einer geöffneten Stellung umschaltbar, wozu zwei Antriebe 8, 9 vorgesehen sind. Dabei sind ein Öffnungsmagnetantrieb 8 zur Öffnung des Druckluftventils 6 und folgedessen Entlüften der Hauptluftleitung 7 und ein Schließmagnetantrieb 9 zum Schließen des Druckluftventils 6 vorgesehen. Ist keiner der Antriebe bestromt, so verbleibt das Druckluftventil 6 in seiner letzten Position. Ein Öffnungsrelais 10 mit elektromagnetischem Antrieb ist mit je einem Öffnungskontakt 11 und einem Schließkontakt 12 ausgestattet, welche gleichzeitig durch den elektromagnetischem Antrieb betätigbar sind. Ein Schließrelais 13 weist denselben Aufbau wie das Öffnungsrelais 10 auf und umfasst somit auch einen elektromagnetischen Antrieb, einen Öffnungskontakt 14 und einen Schließkontakt 14. Die Eingänge der beiden Kontakte 4, 5 der Fahrgastnotbremse 2, sowie die Eingänge der Kontakte 11 und 12 des Öffnungsrelais 10 sind jeweils mit einer Versorgungsspannung 16 beaufschlagt. Der Eingang des Schließkontakts 15 des Schließrelais 13 ist ebenso mit der Versorgungsspannung 16 beaufschlagt. Der Ausgang des Schließkontakts 12 des Öffnungsrelais 10 ist an den Eingang des Öffnungskontakts 14 des Schließrelais 15 geführt. Die Ausgänge des Öffnungskontakts 11 des Öffnungsrelais 10 und der Ausgang des Schließkontakts 15 des Schließrelais 13 sind jeweils an den Eingang des Öffnungsmagnetantriebs 8 des Druckluftventils 6 geführt, der Ausgang des Öffnungskontakts 14 des Schließrelais 13 ist an den Eingang des Schließmagnetantriebs 9 des Druckluftventils 6 geführt. Fig.1 stellt die erfindungsgemäße Notbremseinrichtung 1 in spannungslosem Zustand dar, bei welchem keines der Relais 10, 13 bestromt sind und das Druckluftventil 6 seine letzte Position beibehält.

Im Folgenden ist die Funktion der Notbremseinrichtung 1 bei vorhandener Versorgungsspannung 16 und bei Auslösung einer Notbremsung beschrieben.

### Notbremseinrichtung 1 bei vorhandener Versorgungsspannung 16:

Liegt eine Versorgungsspannung 16 an, so wird diese bei nicht betätigtem Notbremsgriff 2 über den geschlossenen Öffnungskontakt 4 der Fahrgastnotbremse 2 an den Antrieb des Öffnungsrelais 10 geleitet, dieser somit bestromt und das Öffnungsrelais 10 öffnet seinen Öffnungskontakt 12 und schließt seinen Schließkontakt 12. Das Schließrelais 13 ist dabei nicht bestromt, da der Schließkontakt 5 der Fahrgastnotbremse 2 geöffnet ist. Die Versorgungsspannung 16 wird somit über den geschlossenen Schließkontakt 12 und über den geschlossenen Öffnungskontakt 14 zu dem Schließantrieb 9 des Druckluftventils 6 geleitet, dadurch wird das Druckluftventil 6 in seine geschlossene Position bewegt bzw. in dieser gehalten und es findet kein Austritt von Druckluft über die Entlüftung 17 statt.

Kommt es in diesem Zustand der Notbremseinrichtung 1 zu einem Ausfall der Versorgungsspannung 16, so fällt das Öffnungsrelais 10 ab, das Druckluftventil 6 verbleibt jedoch in geschlossener Position und es findet keine Entlüftung der Hauptluftleitung 7 statt.

### Notbremseinrichtung 1 bei vorhandener Versorgungsspannung 16 und ausgelöster Notbremse:

Ist die Notbremse ausgelöst, d.h. der der Fahrgastnotbremsgriff 3 betätigt, so sind der Öffnungskontakt 4 der Fahrgastnotbremse 2 geöffnet und der Schließkontakt 5 der Fahrgastnotbremse 2 geschlossen. Somit wird die Versorgungsspannung 16 nicht an den Antrieb des Öffnungsrelais 10 geleitet, wodurch dieses nicht mehr bestromt wird und abfällt. Dadurch werden der Öffnungskontakt 11 des Öffnungsrelais 10 geschlossen und der Schließkontakt 12 des Öffnungsrelais 10 geöffnet. Durch den geschlossenen Schließkontakt 5 der Fahrgastnotbremse 2 wird die Versorgungsspannung 16 an den Antrieb des Schließrelais 1 geführt, wodurch der Öffnungskontakt 14 des Schließrelais 13 geöffnet und er Schließkontakt 15 der des Schließrelais 13 geschlossen wird. Durch das Öffnen des Öffnungskontakt 14 des Schließrelais 13 wird der Schließmagnetantrieb 9 des Druckluftrelais 6 nicht mehr bestromt. Der Öffnungsantrieb 8 des Druckluftrelais 6 wird sowohl über den geschlossenen Öffnungskontakt 11 des Öffnungsrelais 10 als auch über den geschlossenen Schließkontakt 15 des Schließrelais 13 mit der Versorgungsspannung 16 beaufschlagt. Dadurch wird das Druckluftventil 6 in seine geöffnete Position bewegt bzw. in dieser gehalten und es findet ein Austritt von Druckluft über die Entlüftung 17 statt.

Bei Fahrzeugen mit mehreren Fahrgastnotbremsen 2 sind die Ausgänge ihren Schließkontakte 5 parallel zu schalten und an den Antrieb eines Schließrelais 13 zu führen und die Öffnungskontakte 4 in Serie zu schalten, sodass nur ein Eingang eines Öffnungskontakts mit der Versorgungsspannung 16 zu beaufschlagen ist. Dadurch kann die erfindungsgemäße Funktion auch bei einer Mehrzahl von Fahrgastnotbremsen 2 erhalten werden.

### Liste der Bezeichnungen

- 1: Notbremseinrichtung
- 2: Fahrgastnotbremse
- 3: Fahrgastnotbremsgriff
- 4: Öffnungskontakt Fahrgastnotbremse
- 5: Schließkontakt Fahrgastnotbremse
- 6: bistabiles, elektromagnetisches Druckluftventil
- 7: Hauptluftleitung
- 8: Öffnungsmagnetantrieb
- 9: Schließmagnetantrieb
- 10: Öffnungsrelais
- 11: Öffnungskontakt Öffnungsrelais
- 12: Schließkontakt Öffnungsrelais
- 13: Schließrelais
- 14: Öffnungskontakt Schließrelais
- 15: Schließkontakt Schließrelais
- 16: Versorgungsspannung
- 17: Entlüftung

## Patentansprüche

1. Notbremseinrichtung (1) für ein Schienenfahrzeug mit einer Druckluftbremsanlage, bei welcher eine Bremsung durch Absenken des Luftdrucks in einer Hauptluftleitung (7) bewirkbar ist,
**dadurch gekennzeichnet, dass**
mindestens eine Fahrgastnotbremse (2) vorgesehen ist, welche einen manuell betätigbaren Fahrgastnotbremsgriff (3) umfasst, welcher auf je einen elektrischen Öffnungskontakt (4) und einen Schließkontakt (5) wirkt, und wobei ein bistabiles, elektromagnetisch betätigbares Druckluftventil (6) vorgesehen ist, welches zur Entlüftung einer Hauptluftleitung (7) ins Freie eingerichtet ist und welches je einen Öffnungsmagnetantrieb (8) und einen Schließmagnetantrieb (9) umfasst, und wobei ein Öffnungsrelais (10) vorgesehen ist, welches je einen elektrischen Öffnungskontakt (11) und einen Schließkontakt (12) umfasst, und wobei ein Schließrelais (13) vorgesehen ist, welches je einen elektrischen Öffnungskontakt (14) und einen Schließkontakt (15) umfasst, wobei
die Eingänge des elektrischen Öffnungskontakts (4) und des Schließkontakts (5) mit einer Versorgungsspannung (16) verbunden sind und der Ausgang des Öffnungskontakts (4) an den elektrischen Antrieb des Öffnungsrelais (10) geführt ist und
der Ausgang des Schließkontakts (5) an den elektrischen Antrieb des Schließrelais (13) geführt ist, wobei die Eingänge des Öffnungskontakts (11) und des Schließkontakts (12) des Öffnungsrelais (10) mit einer Versorgungsspannung (16) verbunden sind,
wobei der Ausgang des Schließkontakts (12) des Öffnungsrelais (10) an den Eingang des Öffnungskontakts (14) des Schließrelais (13) geführt ist, wobei der Eingang des Schließkontakts (15) des Schließrelais (13) mit einer Versorgungsspannung (16) verbunden ist, wobei der Ausgang des Öffnungskontakts (14) des Schließrelais (13) an den Schließmagnetantrieb (9) des Druckluftventils (6) geführt ist, und wobei sowohl der Ausgang des Öffnungskontakts (11) als auch der Ausgang des Schließkontakts (15) an den Öffnungsmagnetantrieb (8) des Druckluftventils (6) geführt sind.

2. Notbremseinrichtung (1) für ein Schienenfahrzeug nach Anspruch 1,
**dadurch gekennzeichnet, dass**
sowohl der Ausgang des Öffnungskontakts (11) als auch der Ausgang des Schließkontakts (15) an eine Wagensteuerung geführt sind.

3. Notbremseinrichtung (1) für ein Schienenfahrzeug nach Anspruch 1 oder 2
**dadurch gekennzeichnet, dass** ein elektromagnetisch ansteuerbares Notbremsüberbrückungsventil zwischen der Hauptluftleitung (7) und dem bistabilen, elektromagnetischen Druckluftventil (6) angeordnet ist.

## Claims

1. Emergency brake device (1) for a rail vehicle with a compressed air brake facility, in which a braking can be caused by lowering the air pressure in a main air line (7), **characterised in that**
at least one passenger emergency brake (2) is provided, which comprises a manually actuatable passenger emergency brake handle (3), which acts on an electrical opening contact (4) and a closing contact (5) in each case, and wherein a bistable, electromagnetically actuatable compressed air valve (6) is provided, which is configured for venting a main air line (7) into the open air and which comprises an opening magnetic drive (8) and a closing magnetic drive (9) in each case, and wherein an opening relay (10) is provided, which comprises an electrical opening contact (11) and a closing contact (12) in each case, and wherein a closing relay (13) is provided, which comprises an electrical opening contact (14) and a closing contact (15) in each case, wherein
the inputs of the electrical opening contact (4) and the closing contact (5) are connected to a supply voltage (16) and the output of the opening contact (4) is guided to the electrical drive of the opening relay (10) and the output of the closing contact (5) is guided to the electrical drive of the closing relay (13), wherein the inputs of the opening contact (11) and the closing contact (12) of the opening relay (10) are connected to a supply voltage (16), wherein the output of the closing contact (12) of the opening relay (10) is guided to the input of the opening contact (14) of the closing relay (13), wherein the input of the closing contact (15) of the closing relay (13) is connected to a supply voltage (16), wherein the output of the opening contact (14) of the closing relay (13) is guided to the closing magnetic drive (9) of the compressed air valve (6), and wherein
both the output of the opening contact (11) and the output of the closing contact (15) are guided to the opening magnetic drive (8) of the compressed air valve (6).

2. Emergency brake device (1) for a rail vehicle according to claim 1,
**characterised in that**
both the output of the opening contact (11) and the output of the closing contact (15) are guided to a car controller.

3. Emergency brake device (1) for a rail vehicle according to claim 1 or 2,
**characterised in that** an electromagnetically actuatable emergency brake override valve is arranged between the main air line (7) and the bistable, electromagnetic compressed air valve (6).

## Revendications

1. Dispositif de freinage d'urgence (1) pour véhicule ferroviaire doté d'un système de freinage à air comprimé, dans lequel le freinage peut être effectué en réduisant la pression d'air dans une conduite d'air principale (7), **caractérisé en ce qu'**il est prévu au moins un frein d'urgence passager (2), qui comprend une poignée de frein d'urgence passager actionnable manuellement (3), qui agit sur un contact électrique d'ouverture (4) et un contact de fermeture (5), et dans lequel il est prévu une vanne à air comprimé (6) bistable et actionnable électromagnétiquement, qui est conçue pour purger une conduite d'air principale (7) vers l'extérieur et qui comprend respectivement un entraînement magnétique d'ouverture (8) et un entraînement magnétique de fermeture (9), et dans lequel il est prévu un relais d'ouverture (10), qui comprend respectivement un contact d'ouverture électrique (11) et un contact de fermeture (12), et dans lequel il est prévu un relais de fermeture (13), qui comprend respectivement un contact d'ouverture électrique (14) et un contact de fermeture (15), dans lequel les entrées du contact électrique d'ouverture (4) et du contact de fermeture (5) sont reliées à une tension d'alimentation (16) et la sortie du contact d'ouverture (4) mène à l'entraînement électrique du relais d'ouverture (10) et la sortie du contact de fermeture (5) mène à l'entraînement électrique du relais de fermeture (13), les entrées du contact d'ouverture (11) et du contact de fermeture (12) du relais d'ouverture (10) étant reliées à une tension d'alimentation (16), la sortie du contact de fermeture (12) du relais d'ouverture (10) menant à l'entrée du contact d'ouverture (14) du relais de fermeture (13), l'entrée du contact de fermeture (15) du relais de fermeture (13) étant reliée à une tension d'alimentation (16), la sortie du contact d'ouverture (14) du relais de fermeture (13) menant à l'entraînement magnétique de fermeture (9) de la vanne à air comprimé (6) et la sortie du contact d'ouverture (11) ainsi que la sortie du contact de fermeture (15) menant à l'entraînement magnétique d'ouverture (8) de la vanne à air comprimé (6).

2. Dispositif de freinage d'urgence (1) pour véhicule ferroviaire selon la revendication 1,
**caractérisé en ce qu'**à la fois la sortie du contact d'ouverture (11) et la sortie du contact de fermeture (15) mènent à une commande de wagon.

3. Dispositif de freinage d'urgence (1) pour véhicule ferroviaire selon la revendication 1 ou 2,
**caractérisé en ce qu'**une vanne de dérivation de freinage d'urgence à commande électromagnétique est disposée entre la conduite d'air principale (7) et la vanne d'air comprimé électromagnétique bistable (6).
